# EUROPÄISCHE PATENTSCHRIFT

(11) **EP 3 173 371 B1**
(45) Veröffentlichungstag und Bekanntmachung des Hinweises auf die Patenterteilung: **09.01.2019**
(21) Anmeldenummer: 16199718.4
(22) Anmeldetag: 21.11.2016
(51) Int. Cl.: B66F 9/075, H04B 5/00, H04W 4/80

(54) **FLURFÖRDERZEUG MIT EINER TRAGBAREN FUNKBEDIENEINHEIT SOWIE VERFAHREN ZUR BEDIENUNG EINES FLURFÖRDERZEUGS AUS DER ENTFERNUNG MIT EINER TRAGBAREN FUNKBEDIENEINHEIT**
INDUSTRIAL TRUCK WITH A PORTABLE RADIO CONTROL UNIT AND METHOD FOR OPERATING AN INDUSTRIAL TRUCK FROM A DISTANCE WITH A PORTABLE RADIO CONTROL UNIT
CHARIOT DE MANUTENTION COMPRENANT UNE UNITÉ DE COMMANDE RADIO PORTATIVE ET PROCÉDÉ DE TÉLÉCOMMANDE D'UN CHARIOT DE MANUTENTION PAR L'INTERMÉDIAIRE D'UNE UNITÉ DE COMMANDE RADIO PORTATIVE

(30) Priorität: 27.11.2015 DE 102015120686
(43) Veröffentlichungstag der Anmeldung: 31.05.2017
(60) Teilanmeldung: 18205762.0
(73) Patentinhaber: Jungheinrich Aktiengesellschaft, 22047 Hamburg (DE)
(72) Erfinder: Wetegrove, Ralf, 22850 Hamburg (DE); Grabbe, Florian, 22335 Hamburg (DE)
(74) Vertreter: Hauck Patentanwaltspartnerschaft mbB

(56) Entgegenhaltungen:
- WO-A2-2008/039649
- US-A1- 2014 133 584

## Beschreibung

Die vorliegende Erfindung betrifft ein Flurförderzeug mit einem fahrzeugfesten Fahrzeugfunkmodul und einer tragbaren Funkbedieneinheit. Die Erfindung betrifft ebenfalls ein Verfahren zur Bedienung eines Flurförderzeugs aus der Entfernung unter Verwendung einer tragbaren Funkbedieneinheit.

Aus WO 2008/039649 ist ein tragbares, kabelloses Funkfernbediensystem für ein Materialhandhabungsgerät bekannt. Das Funkfernbedienungssystem wird vom Bediener wie ein Handschuh oder ein anderes Kleidungsstück angezogen und so, ohne gehalten oder getragen werden zu müssen, von dem Benutzer mitgeführt. Das Funkfernbediensystem besteht aus einem Sender und einer mit dem Sender über ein Kabel gekoppelten Bedieneinrichtung, an der der Benutzer Fahrbefehle absetzen kann. Zur Herstellung einer Verbindung kann der Fahrer einen Pairing Mode an dem Flurförderzeug einstellen. Hierzu wird an dem Flurförderzeug eine Liste von Identifikationscodes sämtlicher in der Reichweite befindlichen Transmitter angezeigt. Der Benutzer überprüft die aufgelisteten Identifikationscodes der Transmitter und wählt denjenigen aus, der seinem aktuell getragenen Fernbedienungssystem entspricht. Durch die Bestätigung des Identifikationscodes wird das Fernbedienungssystem mit dem Flurförderzeug gekoppelt. Als Nachteil an dem bekannten Verfahren hat sich herausgestellt, dass das Auswählen oder Eingeben eines Identifikationscodes an dem Flurförderzeug fehleranfällig und zeitaufwendig ist.

Aus dem Dokument NFCForum-AD-BTSSP_1.0 mit dem Titel "Bluetooth Secure Simple Pairing Using NFC" ist es bekannt, in einem Bluetooth-Netzwerk NFC-Einheiten einzusetzen, wobei NFC für Nahfeld-Kommunikation steht. Diese Einheiten werden eingesetzt, um eine Geräteverbindung aufzubauen, eine sichere Verbindung herzustellen oder den Start einer Anwendung auszulösen.

WO 2015/007056 schlägt vor, für eine Bluetooth-Verbindung eine NFC-Einheit zur Authentifikation der Geräte zu verwenden.

Aus US 2014/0133584 A1 ist ein Bluetooth-Gerät und ein zugehöriges Kommunikationsverfahren zur Herstellung einer Verbindung bekannt geworden, bei dem das Pairing über ein Out-of-band-Kanal erfolgt. Für diesen Out-of-band-Kanal kann eine NFC-Verbindung vorgesehen sein.

Der Erfindung liegt die Aufgabe zugrunde, bei einem Flurförderzeug mit einer Funkfernbedienung in einfacher Weise und ohne zu großen Zeitaufwand eine Funkverbindung zwischen dem Fahrzeugfunkmodul und der Funkfernbedienung herzustellen.

Erfindungsgemäß wird die Aufgabe durch eine Vorrichtung mit den Merkmalen aus Anspruch 1 und ein Verfahren mit den Merkmalen aus Anspruch 7 gelöst. Vorteilhafte Ausgestaltungen bilden den Gegenstand der Unteransprüche.

Das erfindungsgemäße Flurförderzeug besitzt ein fahrzeugfestes Fahrzeugfunkmodul und eine tragbare Funkbedieneinheit. In einem gekoppelten Zustand zwischen Fahrzeugfunkmodul und Funkbedieneinheit können Bedienbefehle und andere Signale an das Fahrzeugfunkmodul in einem ersten Protokoll drahtlos gesendet werden. Über die hierzu vorgesehenen Bedienbefehle kann das Flurförderzeug aus der Entfernung bedient werden. Erfindungsgemäß sind Fahrzeugfunkmodul und Funkbedieneinheit jeweils mit einer zusätzlichen Funkeinheit ausgestattet, die ein erstmaliges Pairing ausführt. Im Rahmen des Pairings werden Identifikationsadressen für das Fahrzeugfunkmodul und für die Funkbedieneinheit ausgetauscht, um über das erste Protokoll eine Datenverbindung aufbauen zu können. Bei dem erfindungsgemäße Flurförderzeug sind zusätzlich zu den Einheiten, die einen Datenaustausch über das erste Protokoll bewirken, zusätzliche Funkeinheiten vorgesehen, die das Pairing zwischen dem Fahrzeug mit seinem Fahrzeugfunkmodul und der tragbaren Funkbedieneinheit herstellen.

Ein besonderer Vorteil des erfindungsgemäßen Flurförderzeugs gegenüber herkömmlichen Flurförderzeugen wird deutlich, wenn eine Vielzahl von Funkbedieneinheiten vorhanden ist. Jeder der Funkbedieneinheiten ist ausgebildet, um über ihre Funkeinheit das anfängliche Pairing mit dem fahrzeugfesten Fahrzeugfunkmodul durchzuführen. Der besondere Vorteil des erfindungsgemäßen Flurförderzeugs liegt darin, dass bei der Verwendung einer Vielzahl von Funkbedieneinheiten ein schnelles Pairing möglich ist. Im Gegensatz dazu wird bei einem herkömmlichen Pairing, bei dem dem Benutzer eine Liste von Identifikationsnummern angeboten wird, bei einer Vielzahl von Funkbedieneinheiten und ihren Identifikationsnummern deren Darstellung für einen Benutzer schnell unübersichtlich. Auch Verwechslungen innerhalb der Liste können vermieden werden. Erfindungsgemäß sind die zusätzlichen Funkeinheiten von Funkbedieneinheit und Fahrzeugfunkmodul ausgebildet, um in einem Nahfeld das anfängliche Pairing auszuführen, dies erfolgt ohne eine zusätzliche nutzerseitige Eingabe.

In einer bevorzugten Ausgestaltung besitzt die Funkbedieneinheit eine lesbare und wiederbeschreibbare NFC-Einheit. In der NFC-Einheit kann eine eindeutige Identifikationsadresse der Funkbedieneinheit eingespeichert sein und aus dem Speicher gelesen werden. Zudem kann in der NFC-Einheit die empfangene Identifikationsadresse des Fahrzeugfunkmoduls gespeichert werden.

In einer weiteren bevorzugten Ausgestaltung ist das Fahrzeugfunkmodul mit einem NFC-Modul ausgestattet, das eine Sende- und Empfangseinheit besitzt. Das NFC-Modul kann anders als die NFC-Einheit beispielsweise dazu ausgebildet sein, um eine NFC-Verbindung von sich aus aufzubauen. Die NFC Einheit wird bei Annäherung durch das NFC Modul des Fahrzeugfunkmoduls mit Strom versorgt und sendet daraufhin ihre MAC-Adresse an das NFC Modul.

In einer bevorzugten Ausgestaltung werden die Bedienbefehle über Bluetooth zwischen dem Fahrzeugfunkmodul und der Funkbedieneinheit ausgetauscht. In dem Bluetooth-Protokoll stehen für die ausgetauschten Identifikationsadressen bevorzugt die MAC-Adresse des Fahrzeugfunkmoduls und der Funkbedieneinheit. Die MAC-Adressen kann auch das Bluetooth-Protokoll für eine eindeutige Verbindung und Zuordnung nutzen. Bevorzugt wird ein erfolgtes Pairing durch eine an dem Fahrzeug angebrachte Bestätigungseinrichtung dem Benutzer signalisiert. Dies kann optisch und/oder akustisch an dem Fahrzeug erfolgen. Grundsätzlich könnte die Bestätigungseinrichtung an dem Fahrzeug auch zusätzlich oder ausschließlich einen Bestätigungsvorgang an der Funkbedieneinheit auslösen.

Die erfindungsgemäße Aufgabe wird ebenfalls durch ein Verfahren mit den Merkmalen aus Anspruch 7 gelöst. Das Verfahren verwendet eine tragbare Funkfernbedieneinheit, die an ein fahrzeugfestes Fahrzeugfunkmodul in einem ersten Protokoll Bedienbefehle sendet, wobei Fahrzeugfunkmodul und Funkbedieneinheit jeweils eine zusätzliche Funkeinheit besitzen. Das erfindungsgemäße Verfahren sieht für ein anfängliches Pairing als Verfahrensschritt vor, dass die zusätzliche Funkeinheit der Funkbedieneinheit ihre Identifikationsadresse für das erste Protokoll an die Funkeinheit des Fahrzeugfunkmoduls sendet. Die Funkeinheit des Fahrzeugfunkmoduls sendet ihre
Identifikationsadresse für das erste Protokoll an die Funkeinheit der Funkbedieneinheit. Eine Verbindung zwischen der Funkeinheit des Fahrzeugfunkmoduls und der Funkbedieneinheit wird über das erste Protokoll unter Verwendung der Identifikationsadressen hergestellt. Ein besonderer Aspekt bei dem erfindungsgemäßen Verfahren ist, dass ohne ein aktives Eingreifen des Benutzers ein Pairing erfolgt.

Bevorzugt wird der Vorgang des anfänglichen Pairings gestartet, indem die Funkbedieneinheit mit einem Abstand von weniger als 20 cm, bevorzugt weniger als 10 cm an das Fahrzeugfunkmodul gehalten wird. Besonders deutlich wird der dadurch erzielte Vorteil, wenn eine Vielzahl von Funkbedieneinheiten zur Verfügung steht, aus denen der Benutzer frei auswählen kann. Der Benutzer wählt eine noch nicht verbundene Funkbedieneinheit aus und hält diese räumlich in die Nähe des Fahrzeugfunkmoduls. Hierdurch wird ohne weiteres Zutun das Pairing vorgenommen, wenn das Fahrzeugfunkmodul noch nicht verbunden ist.

Mit erfolgtem Pairing kann eine Bluetooth-Verbindung zum Datenaustausch aufgebaut werden. Das Pairing erfolgt über eine Nahfeld-Kommunikation.

Ein bevorzugtes Ausführungsbeispiel wird nachfolgend anhand der Figuren näher erläutert. Es zeigen:
- Fig. 1: ein erfindungsgemäßen Flurförderzeug in einer Ansicht von der Seite mit einer schematisch dargestellten Funkbedieneinheit und
- Fig. 2: ein zeitliches Ablaufdiagramm für den Aufbau einer Bluetooth-Verbindung.

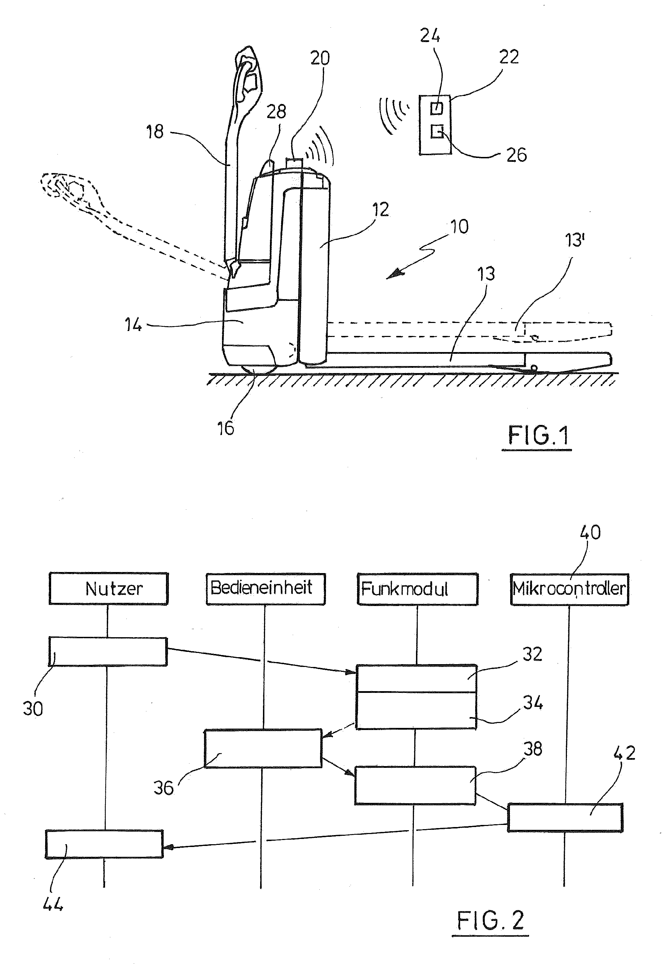

Fig. 1 zeigt in einer Ansicht von der Seite ein Niederhubfahrzeug 10, das ein Lastteil 12 und ein Antriebsteil 14 besitzt. Das Lastteil 12 besitzt zwei Lastarme 13, die in eine angehobene Position 13' gehoben werden können. Das Antriebsteil 14 besitzt ein gelenktes und angetriebenes Rad 16, dessen Ausrichtung durch die Deichsel 18 vorgebbar ist.

Das in Fig. 1 dargestellte Fahrzeug besitzt ein an dem Antriebsteil 14 des Fahrzeugs angebrachtes Fahrzeugfunkmodul 20, das mit einer Funkbedieneinheit 22 in Funkverbindung steht. Die Funkbedieneinheit 22 ist in Fig. 1 schematisch mit zwei Bedienelementen 24 und 26 ausgerüstet. Wird ein Bedienelement 24, 26 an der Funkbedieneinheit 22 betätigt, so wird das entsprechende Betätigungssignal von der Funkbedieneinheit 22 gesendet und durch das Fahrzeugfunkmodul empfangen. Das empfangene Bestätigungssignal wird an eine Fahrzeugsteuerung weitergeleitet. Ferner ist in Fig. 1 eine optische Anzeigeeinheit 28 zu erkennen, die durch ein Leucht- oder Blinksignal gut sichtbar anzeigt, dass eine Funkverbindung zwischen dem Fahrzeugfunkmodul 20 und der tragbaren Funkbedieneinheit 22 aufgebaut wurde. Das Fahrzeugfunkmodul 20 besitzt bevorzugt ein NFC-Modul, das Daten von NFC-Einheiten in seiner Nähe lesen und auch Daten in die NFC-Einheiten schreiben kann. Die Funkbedieneinheit 22 ist mit einer lesbaren und wiederbeschreibbaren NFC-Einheit ausgestattet.

Fig. 2 zeigt in einem zeitlichen Ablaufdiagramm den Aufbau der Bluetooth-Verbindung. In einem ersten Schritt 30 hält ein Nutzer seine Funkbedieneinheit 22 in die räumliche Nähe des Fahrzeugfunkmoduls 20. Der Abstand hierbei beträgt bevorzugt weniger als 20 cm, besonders bevorzugt weniger als 10 cm. Es kann auch vorgesehen sein, dass die Funkbedieneinheit 22 direkt in Kontakt mit dem Fahrzeugfunkmodul 20 gebracht wird, um ein Pairing herzustellen. In einem nachfolgenden Schritt 32 erkennt das Fahrzeugfunkmodul 20, dass eine Funkbedieneinheit sich in seiner Nähe befindet. Im darauf folgenden Verfahrensschritt 34 sendet das Fahrzeugfunkmodul seine Identifikationsnummer an die Bedieneinheit 22. Diese empfängt in Verfahrensschritt 36 die Identifikationsadresse und sendet ihre Identifikationsadresse an das Funkmodul zurück, das diese in Verfahrensschritt 38 empfängt. Der Austausch der Daten zwischen den Verfahrensschritten 34 und 36 sowie den Verfahrensschritten 36 und 38 erfolgt über eine Nahfeld-Kommunikation (NFC). Mit Hilfe der Nahfeld-Kommunikation werden die MAC-Adressen für die nachfolgende Bluetooth-Verbindung ausgetauscht.

Liegen die beiden MAC-Adressen vor, so leitet das Fahrzeugfunkmodul die einander zugeordneten (Pairing) MAC-Adressen an eine Fahrzeugsteuerung 40 weiter. Die Fahrzeugsteuerung 40 erteilt in Verfahrensschritt 42 dem Fahrzeugfunkmodul den Auftrag, über die MAC-Adressen eine Funkverbindung zu dem Nutzer in Schritt 44 aufzubauen.

### Bezugszeichenliste

- 10: Niederhubfahrzeug
- 12: Lastteil
- 13: Lastarme
- 13': Position der Lastarme
- 14: Antriebsteil
- 16: angetriebenes Rad
- 18: Deichsel
- 20: Fahrzeugfunkmodul
- 22: Funkbedieneinheit
- 24: Bedienelement
- 26: Bedienelement
- 28: Anzeigeeinheit
- 30: Verfahrensschritt
- 32: Verfahrensschritt
- 34: Verfahrensschritt
- 36: Verfahrensschritt
- 38: Verfahrensschritt
- 40: Fahrzeugsteuerung
- 42: Verfahrensschritt
- 44: Verfahrensschritt

## Patentansprüche

1. Flurförderzeug (10) mit einem fahrzeugfesten Fahrzeugfunkmodul (20) und einer tragbaren Funkbedieneinheit (22), die in einem gekoppelten Zustand Bedienbefehle an das Fahrzeugfunkmodul (20) in einem ersten Protokoll drahtlos senden kann, **dadurch gekennzeichnet, dass** das Fahrzeugfunkmodul (20) und die Funkbedieneinheit (22) jeweils eine zusätzliche Funkeinheit zu einem erstmaligen Pairing aufweisen, die jeweils eine Identifikationsadresse für das erste Protokoll austauscht, wobei eine Vielzahl von Funkbedieneinheiten vorgesehen ist, von der jede ausgebildet ist, um über ihre zusätzliche Funkeinheit das anfängliche Pairing mit dem fahrzeugfesten Fahrzeugfunkmodul durchzuführen und die zusätzlichen Funkeinheiten von Funkbedieneinheit (22) und Fahrzeugfunkmodul (20) ausgebildet sind, in einem Nahfeld das anfängliche Pairing auszuführen, das ohne Eingabe von dem Benutzer erfolgt.

2. Flurförderzeug nach Anspruch 1, **dadurch gekennzeichnet, dass** die Funkbedieneinheit (22) eine lesbare und wiederbeschreibbare NFC-Einheit besitzt.

3. Flurförderzeug nach Anspruch 1 oder 2, **dadurch gekennzeichnet, dass** das Fahrzeugfunkmodul (20) ein NFC-Modul mit Sende- und Empfangseinheit aufweist.

4. Flurförderzeug nach einem der Ansprüche 1 bis 3, **dadurch gekennzeichnet, dass** die ausgetauschten Identifikationsadressen die MAC-Adressen des Fahrzeugfunkmoduls (20) und der Funkbedieneinheit (22) darstellen.

5. Flurförderzeug nach einem der Ansprüche 1 bis 4, **dadurch gekennzeichnet, dass** die Bedienbefehle über Bluetooth ausgetauscht werden.

6. Flurförderzeug nach einem der vorangegangenen Ansprüche, **dadurch gekennzeichnet, dass** eine Bestätigungseinrichtung an dem Fahrzeug angeordnet ist, die ein erfolgtes Pairing anzeigt und/oder dessen Anzeigen auslöst.

7. Verfahren zur Bedienung eines Flurförderzeugs aus der Entfernung unter Verwendung einer tragbaren Funkbedieneinheit (22), die an ein fahrzeugfestes Fahrzeugfunkmodul (20) in einem ersten Protokoll Bedienbefehle sendet, **dadurch gekennzeichnet, dass** Fahrzeugfunkmodul (20) und Funkbedieneinheit (22) jeweils eine zusätzliche Funkeinheit besitzen, das Verfahren für ein anfängliches Pairing folgende Verfahrensschritte aufweist:
- die zusätzliche Funkeinheit der Funkbedieneinheit (22) sendet ihre Identifikationsadresse für das erste Protokoll an die Funkeinheit des Fahrzeugfunkmoduls (20),
- die Funkeinheit des Fahrzeugfunkmoduls (20) sendet ihre Identifikationsadresse für das erste Protokoll an die Funkeinheit der Funkbedieneinheit (22),
- eine Verbindung zwischen der Funkeinheit des Fahrzeugfunkmoduls (20) und der Funkeinheit der Funkbedieneinheit (22) wird über das erste Protokoll hergestellt und
- der Vorgang des anfänglichen Pairings gestartet wird, indem die Funkbedieneinheit (22) mit einem Abstand von weniger als 20 cm an das Fahrzeugfunkmodul (20) gehalten wird, wobei das anfängliche Pairing über eine Nahfeld-Kommunikation erfolgt.

8. Verfahren nach Anspruch 7, **dadurch gekennzeichnet, dass** als Verbindung zwischen Funkeinheit eine Bluetooth-Verbindung aufgebaut wird.

## Claims

1. Industrial truck (10) with a vehicle-fixed vehicle radio module (20) and a portable radio operating unit (22), which can wirelessly transmit operating commands in a coupled state to the vehicle radio module (20) in a first protocol, **characterised in that**
the vehicle radio module (20) and the radio operating unit (22) each comprise an additional radio unit for a first-time pairing, which additional radio units each exchange an identification address for the first protocol, a plurality of radio operating units being provided, each of which is configured to carry out the initial pairing with the vehicle-fixed vehicle radio module by means of the additional radio unit thereof and the additional radio units of the radio operating unit (22) and the vehicle radio module (20) being configured to perform the initial pairing in a near field, which pairing takes place without input from the user.

2. Industrial truck according to claim 1, **characterised in that** the radio operating unit (22) comprises a readable and rewritable NFC unit.

3. Industrial truck according to claim 1 or 2, **characterised in that** the vehicle radio module (20) comprises an NFC module with a transceiver unit.

4. Industrial truck according to any of claims 1 to 3, **characterised in that** the identification addresses exchanged are the MAC addresses of the vehicle radio module (20) and the radio operating unit (22).

5. Industrial truck according to any of claims 1 to 4, **characterised in that** the operating commands are exchanged via Bluetooth.

6. Industrial truck according to any of the preceding claims, **characterised in that** a confirmation device is arranged on the vehicle, which device displays a completed pairing and/or activates the display thereof.

7. Method for remotely operating an industrial truck using a portable radio operating unit (22), which transmits operating commands to a vehicle-fixed vehicle radio module (20) in a first protocol, **characterised in that** the vehicle radio module (20) and the radio operating unit (22) each comprise an additional radio unit, the method comprising the following method steps for an initial pairing:
- the additional radio unit of the radio operating unit (22) transmits the identification address thereof for the first protocol to the radio unit of the vehicle radio module (20),
- the radio unit of the vehicle radio module (20) transmits the identification address thereof for the first protocol to the radio unit of the radio operating unit (22),
- a connection between the radio unit of the vehicle radio module (20) and the radio unit of the radio operating unit (22) is established using the first protocol, and
- the process of the initial pairing is started by the radio operating unit (22) being held at a distance of less than 20 cm from the vehicle radio module (20), the initial pairing taking place using near-field communication.

8. Method according to claim 7, **characterised in that** a Bluetooth connection is set up as the connection between the radio units.

## Revendications

1. Chariot élévateur (10) avec un module radio de véhicule (20) installé fixement dans le véhicule et une unité de commande radio portable (22) capable d'envoyer des ordres de commande au module radio de véhicule (20) dans un état accouplé sans fil dans un premier protocole, **caractérisé en ce que**
le module radio de véhicule (20) et l'unité de commande radio (22) présentent respectivement une unité radio supplémentaire en vue d'un appariement initial, laquelle échange respectivement une adresse d'identification pour le premier protocole, sachant qu'il est prévu une pluralité d'unités de commande radio, parmi lesquelles chacune est conçue pour exécuter l'appariement de départ avec le module radio de véhicule installé fixement dans le véhicule par le biais de son unité radio supplémentaire, et que les unités radio supplémentaires de l'unité de commande radio (22) et du module radio de véhicule (20) sont conçues pour exécuter l'appariement de départ dans un champ proche, lequel ne nécessite pas de saisie de l'utilisateur.

2. Chariot élévateur selon la revendication 1, **caractérisé en ce que** l'unité de commande radio (22) possède une unité NFC lisible et réinscriptible.

3. Chariot élévateur selon la revendication 1 ou 2, **caractérisé en ce que** le module radio de véhicule (20) présente un module NFC avec une unité d'émission/réception.

4. Chariot élévateur selon l'une des revendications 1 à 3, **caractérisé en ce que** les adresses d'identification échangées représentent les adresses MAC du module radio de véhicule (20) et de l'unité de commande radio (22).

5. Chariot élévateur selon l'une des revendications 1 à 4, **caractérisé en ce que** les ordres de commande sont échangées par Bluetooth.

6. Chariot élévateur selon l'une des revendications précédentes, **caractérisé en ce qu'**un dispositif de confirmation est disposé sur le véhicule, indiquant un appariement réalisé et/ou déclenchant l'indication de celui-ci.

7. Procédé pour la commande d'un chariot élévateur à distance à l'aide d'une unité de commande radio portable (22), laquelle envoie des ordres de commande dans un premier protocole à un module radio de véhicule (20) installé fixement dans le véhicule, **caractérisé en ce que** le module radio de véhicule (20) et l'unité de commande radio (22) possèdent respectivement une unité radio supplémentaire, le procédé comprenant les étapes suivantes pour un appariement initial :
- l'unité radio supplémentaire de l'unité de commande radio (22) envoie son adresse d'identification pour le premier protocole à l'unité radio du module radio de véhicule (20),
- l'unité radio du module radio de véhicule (20) envoie son adresse d'identification pour le premier protocole à l'unité radio de l'unité de commande radio (22),
- une liaison entre l'unité radio du module radio de véhicule (20) et l'unité radio de l'unité de commande radio (22) est établie par le premier protocole et
- le processus de l'appariement initial est démarré en maintenant l'unité de commande radio (22) à une distance de moins de 20 cm du module radio de véhicule (20), l'appariement initial étant réalisé par une communication de champ proche.

8. Procédé selon la revendication 7, **caractérisé en ce qu'**une liaison Bluetooth est établie en tant que liaison entre unités radio.
